# EUROPEAN PATENT APPLICATION

(11) **EP 0 635 380 A1**
(43) Date of publication of application: **25.01.1995**
(21) Application number: 93111561.2
(22) Date of filing: 19.07.1993
(51) Int. Cl.: B41M 5/38, G03G 9/09, G03G 9/087, C09C 1/36, C09C 1/56, C09B 67/08

(54) **Coloring composition for image recording**

(71) Applicant: DAINICHISEIKA COLOR & CHEMICALS MFG. CO. LTD., Chuo-ku Tokyo 103 (JP)
(72) Inventor: Nakamura, Michiei, Soka-shi, Saitama-ken (JP); Hasegawa, Masaru, Tokyo (JP); Shinoda, Takamitsu, Toride-shi, Ibaraki-ken (JP); Tsuchiya, Yoshimasa, Tokyo (JP); Higashiide, Kazuhiro, Kawaguchi-shi, Saitama-ken (JP); Horiguchi, Shojiro, Omiya-shi, Saitama-ken (JP)
(74) Representative: Wächtershäuser, Günter, Prof. Dr.

(57) **Abstract**

A coloring composition for image recording, which comprises a pigment and a resin, is disclosed. The pigment is a coating-clad pigment with a thin filmcoating of a hardened polymer substantially insoluble to dispersing medium and having a polar group. When used as colorant for a developer for image recording, the composition provides for sufficient improvement in the stability of development, shelf stability of dispersion, adjustment of toriboelectric charging, etc.

## Description

### BACKGROUND OF THE INVENTION

### FIELD OF THE INVENTION

This invention relates to image recording materials used for image recording, such as electrophotograpy, electrostatic printing, electrostatic recording, thermal transfer recording, ink jet recording, etc., and also coloring compositions used for the manufacture of such recording materials. More specifically, the invention concerns a coloring composition for image recording, which uses a pigment and a resin, and said pigment being with a thin film coating of a hardened polymer substantially insoluble to a dispersing medium and having a polar group and is improved in various properties such as charging property, heat resistance, stability of dispersion, stability of development, etc.

### PRIOR ART

Heretofore, various dyes and pigments have been used as coloring material for image recording, such as full color or monochromatic electrophotography, electrostatic printing, electrostatic recording, thermal transfer recording, ink jet recording, etc. Specifically, oil-soluble dyes, dispersing dyes and pigments are used for electrophotographic dry developers and thermal transfer ribbons, pigments are used for liquid developers for electrophotography, electrostatic printing, electrostatic recording, etc. and water-soluble dyes and pigments are used for inks for ink jet recording.

The oil-soluble and dispersing dyes have high tinting strength because they can color resin media through dissolusion. However, they are inferior in such color fastness as the light resistance, solvent resistance and chemical resistance. The pigments are superior in these various color fastness properties. However, they have problems of charges due to their chemical structures and, in the case of dispersions, settling due to density difference. For example, with liquid developer for the electrophotographic or electrostatic recording system, the electric latent image is developed as electrically double layer development based on the charging of the contact surface of pigment particles with the solvent. This leads to an inconvenience that the positive and negative polarities and intensity of charge due to the chemical structures of pigments selected from the consideration of color hues fail to match the intended development system so that the pigments can not be used or the charge polarities and intensity vary with the pigments.

Accordingly, charge controllers for liquid developer system are often added. These charge controllers are to provide charge to pigment particles in the developer, and usually resin acid metal soaps, fatty acid metal soaps, anionic or cationic surface active agents, etc. are used. However, such charge controllers are soluble in petroleum type solvents and therefore are soon separated from the pigment particles to bring about such change as reduction of charge on pigment particles with the lapse of time.

This means that there is a tendency of increasing settling of the pigment in the liquid developer to deteriorate the stability thereof or changing the developer composition to deteriorate the development performance during long running of development.

Further, the toriboelectric charging of the pigment varies with the chemical structure thereof . With the electrophotographic dry developer, for instance full color developer, the toriboelectric charging naturally varies for different pigments are used for different colors. In practice, the charging of the developer is adjusted by adding charge controllers. As the charge controllers are used metal complex dyes, non-dye type metal complex compounds, amine compounds, ammonium compounds, etc.

However, the adjustment of the charging is difficult if the polarity and extent of charging of the pigments are different very much from those of the charging of the developer or if they are different very much among the pigments. Further, addition of a large amount of the controller has adverse effects on the preservation property such as discoloring, humidity absorption, lowering of softening point etc.

Therefore, the pigments as noted above are insufficient in view of the stability of developer, the shelf stability of dispersion, the adjustment of toriboelectric charging, etc., and there is a demand for the development of a pigment for recording material, which is improved in the above respects.

### SUMMARY OF THE INVENTION

An object of the invention, accordingly, is to provide a coloring composition for image recording, which can overcome the drawbacks in the prior art pigments used for recording materials.

The inventors have conducted extensive researches and investigations with an aim of developing a pigment, which can obviate the prior art drawbacks and is excellent in the color generation and fastness properties. As a result, they found a coating-clad pigment, which has excellent characters and can meet various desired physical properties, and which can be used as coloring material to obtain excellent recording material. The present invention is predicated in this finding.

Specifically, the above object of the invention can be attained by a coloring composition for image recording featured by the invention, which comprises a pigment and a resin component, the pigment being a coating-clad pigment with a thin film coating of a hardened polymer substantially insoluble to dispersing medium and having a polar group.

Since according to the invention the pigment has a thin film coating of a hardened polymer having a polar group, the pigment is improved in various color fastness properties such as the heat resistance, chemical resistance, water resistance, etc. The coloring composition thus can be manufactured stably.

Further, the liquid developer used for electrophotography, electrostatic printing, electrostatic recording, etc. can be charged stably to ensure stable development. Further, the full color liquid developer can maintain stable color balance for long time. Further the resin component can be adsorbed to provide for improved dispersion and settling stabilities of the liquid developer.

Further, in the ink for ink jet also the resin component can be adsorbed to provide for improved stability of the ink.

Further, in the electrostatic dry developer the pigment particles can be charged to facilitate the adjustment of the toriboelectric charging extent. It is further possible to provide and improve the electric insulation of a pigment having low electric resistance.

### PREFERRED MODE OF CARRYING OUT THE INVENTION

The invention will now be described in detail. The coating -clad pigment which is used in and a main feature of the invention, is clad with a coating of a hardened polymer which is substantially insoluble to dispersing medium and has a polar group.

The coating-clad pigment used according to the invention may use any pigment used for image recording. Example of the pigment are those of azo type, polyazo type, azo methine azo type, azomethine type, phthalocyanine type, quinacridone type, anthraquinone type, dioxazine type, indigo -thioindigo type, perillene-perynone type, and isoindolinone type, carbon black pirment, and titanium oxide pigment.

The precursor for the formation of the hardened polymer covering the above well - known pigment used according to the invention forms a hardened polymer which is substantially insoluble to the dispersing medium of image recording material, and its suitable examples are as follows.
(1) Thermosetting organic compounds, initial condensates and thermosetting resins capable of addition or condensation reaction by heat treatment with or without addition of an acidic catalyst. Examples are addition products, condensation products, condensates and co - condensates of compounds selected from polymers and copolymers of members of the group consisting of melamine, urea, ethylene urea, biguanide, benzoguanamine, guanidine, dicyandiamide, phthalic acid amide, alkylphenol, dimethyl aniline, p-toluene sulfonamide, (meth) acrylamide, etc. with aldehyde, e.g., formaldehyde, paraformaldehyde, glyoxal, etc. and also reaction products of the above compounds with alcoxymethyl derivatives and halogenomethyl derivatives.
(2) Thermosetting organic compounds, pre-condensates and thermosetting resins capable of addition or condensation reaction by heat treatment with or without addition of basic catalysts or polycarboxylic acid ahydrides and having an epoxy group or a halohydrine group. Examples are condensates and co-condensates of members of the group consisting of hexamethylene diamine, diethylene triamine, trimethylol propane, diethylene glycol, polyethylene glycol, bisphenol A, etc. with epihalohydrine or dihalohydrine, and also reaction products of these compounds with polymers and co-polymers of glycidyl (meth) acrylate, etc.
(3) Thermosetting organic compounds, pre-condensates and thermosetting resins capable of addition or condensation reaction by heat treatment with or without addition of acidic catalysts or organic tin catalysts and having an isocyanate group or a masked isocyanate group. Examples are polyisocyanates, which are obtainable from members of the group consisting of diphenylmethane diisocyanate, hydrogenated diphenylmethane diisocyanate, hexamethylene diisocyanate, tolyrene diisocyanate, etc. and have a buret bond or an isocyanurate bond, such polyisocyanates as polymers and co-polymers of methacryloyloxyethyl isocyanate and isopropenyldimethylbenzyl isocyanate, masked isocyanates obtainable by reacting the isocyanates noted above with phenol, etc. And polyol of members of the group consisting of polyether polyol, polyester polyol, polyvinyl type polyol, polyacryl type polyol, etc. and amines as polyols, amines, polyamines, polyamide polyamines, etc. and amines, diamines, polyamines, polyamide, etc. capable of reaction with the compounds noted above.

The polar group possessed by the hardened polymer used as the coating resin noted above is a basic or a acidic group. Examples of the basic group are amino group, quarternary ammonium group, pyridinium group, etc. Examples of the acidic group are carboxyl group, sulfonic acid group, sulfuric acid ester group, phosphoric acid ester group, etc.

Examples of the compound which can introduce the above groups are ammonia, ethylene diamine, hexamethylene diamine, dimethylaminoethyl amine, dimethyethanol amine, diethylethanol amine, aniline, dimethyl aniline, glycolic acid, monochloroacetic acid, maleic anhydride, phthalic anhydride, glycine, D,L-alanine, glutamic acid, sulfamic acid, sulfanilic acid, sulfuric acid, phosphorus oxychloride, etc.

To cover the pigment particle surface with the hardened polymer coating using the precursor capable of forming the hardened polymer, the following methods may be selected depending on the status of the pigment used and the character of the precursor used for forming the hardened polymer.
(1) A water-soluble, lower molecular weight precursor or the raw material compound therefor is added, if necessary together with a compound having the polar group noted above, to an aqueous fine dispersion of pigment, then, if necessary, the pigment is further dispersed, then the precursor or the raw material compound therefor is caused to be absorbed to or settled on the pigment particle surface by causing a condensation or addition reaction of the precursor or the raw material compound through heat treatment, addition of a hardening catalyst or changing of the pH, and the absorbed or settled precursor or the raw material compound is completely hardened to obtain a hardened polymer coating on the pigment pigment particle surface.
(2) An aqueous solution of a comparatively high molecular weight thermosetting organic cmpound, obtained through a condensation or addition reaction of a low molecular weight precursor with or without addition of a compound having the polar group noted above, is added to an aqueous fine dispersion of pigment, pigment is further dispersed, if necessary, then the thermosetting organic compound is precipitated on the pigment particle surface by heat treatment, changing of the pH or addition of heavy metal ions, higher aliphatic amine or higher fatty acid, and then completely hardening the polymer to obtain a hardened polymer coating on the pigment particle surface.
(3) An oil-soluble thermosetting organic compound is added to an oily fine dispersion of pigment, pigment is further dispersed, if necessary, and then a condensation or addition reaction is brought about, thereby obtaining a hardened polymer coating on the pigment particle surface.
(4) An oil-drop-in-water type emulsion obtained from an oil-soluble thermosetting organic compound is added to an aqueous fine dispersion of pigment to cause shift of the pigment into the oil drops, and then a hardening reaction is brought about to obtain a hardened polymer coating on the pigment particle surface.

The amount of the hardened polymer covering the pigment particle surface is not determined absolutely, because the specific gravity, surface area, particle diameter, particle shape, etc. of the pigment vary depending on the pigment. Roughly, however, it is 1 to 100 % by weight, preferably 5 to 50 % by weight, of the pigment. It is important that the the hardened polymer coating is a thin film with a thickness of roughly 0.01 to 0.3 µm. If the amount of hardened polymer or the thickness of coating is below the the above range, it is difficult to obtain continuous film on broader surface area, and sufficient physical property improvement of the pigment can not be obtained. If the range is surpassed, on the other hand, insufficient dispersion in dispersing medium results from formation of masses of individual particles. In addition, intrinsic performance of the pigment, such as color tone and coloring density, is reduced.

The adequate coating as above as continuous film may be conveniently formed by the methods (1) and (2) noted above, particularly the method (2).

The coating-clad pigment as above was proved to be excellent in various color fastness properties such as light resistance, heat resistance, chemical resistance, water resistance, etc. as the coloring composition for image recording.

With polarity or amount control of the hardened polymer coating on the pigment particle surface, the coating-clad pigment can serve as a colorant for a developer utilizing pigment particle surface charge for electrophotography, electrostatic printing, electrostatic recording, etc., and it is possible to obtain control and adjustment of the pigment charge.

Further, with a low electric resistance pigment such as carbon black pigment, provision and improvement of the electric insulation property could be observed.

The resin used according to the invention serves as dispersing medium in a solid coloring composition, while it serves as a dispersing agent for a pigment in a liquid coloring composition. Further, when the coloring composition is actually used for a recording material, the resin serves as a binding agent for the pigment.

The resin used for the above purposes may be any resin usually employed in dry and liquid developers for electrophotography, electrostatic printing, electrostatic recording, thermal transfer ink ribbons and films, oily and aqueous ink jet inks and other image recording materials, etc.

Further, to meet various purposes, it is possible to use well-known additives, e.g., charge controllers, fluidizers, etc., and also solvents and aqueous media.

The coloring composition for image recording according to the invention may be included a high concentration coloring composition. The aim of the high concentration coloring composition is that sufficient preliminarily kneeding of the composition for dispersion of the high concentration pigment and preliminary color hue control can facilitate the subsequent process. The high concentration coloring composition may be used in any form, e.g., such solid form as coarse grains, coarse particles, fine particles, sheet-like, small masses, etc. as well as paste form and liquid form.

The content of the coating-clad pigment used according to the invention in the coloring composition including resin, other additives and/or medium, varies depending on the use of the coloring composition. In a solid, paste or liquid coloring composition with a high coating-clad pigment concentration, the content is roughly 15 to 60 % by weight, preferably 20 to 50 % by weight. For application to coloring material for dry developer, etc. for electrophotography, etc., the content is roughly 1 to 10 % by weight, preferably 2 to 8 % by weight. For application to liquid developer, it is roughly 0.01 to 1.0 % by weight, preferably 0.02 to 0.5 % by weight. For application to coloring material for thermal transfer ink ribbon or film, it is roughly 1 to 20 % by weight, preferably 4 to 10 % by weight. The most suitable content is selected depending on application.

### EXAMPLES

Synthesis examples and examples of the invention will now be given to show the invention in further detail. Parts and per cent are by weight.

### Synthesis Example 1 (treatment of pigment)

40 parts of melamine, 100 parts of 35 wt. % formalin, 20 parts of methanol and 28 parts of water were mixed and stirred together while holding the mixture at an elevated temperature of 80°C to obtain a colorless transparent solution. The solution was then cooled down to 55°C and then reacted with 6.6 parts of D,L-aniline and 3.1 parts of 7 wt. % hydrochloric acid aqueous solution. The reaction was continued until one drop of the resultant solution was added to water to presipitate pre-condensate, and then 16.9 parts of 20 wt. % sodium hydroxide aqueous solution, 15.4 parts of water and 20 parts of methanol were added to the mixture to bring about an end to the reaction. The resin solution thus obtained contained about 33 % of solid phase and remained to be transparent when diluted with water.

90.9 parts of this resin solution was diluted with water to 900 parts of resin solution for pigment treatment.

Meanwhile, an aqueous paste containing 100 parts of phthalocyanine blue pigment (C.I. pigment blue 15 : 3) was diluted to 2,000 parts by adding water and sufficiently dispersed. The dispersion was than charged into a reaction vessel, and its pH was adjusted to 4.5 to 5 with acetic acid aqueous solution. To this dispersion, 300 parts of the resin solution noted above was added in drops by taking two hours while holding the mixture at temperatures of 80 to 90°C . The pH of the mixture was then adjusted to 4.5 to 5 with acetic acid aqueous solution, and the mixture was stirred continuously for 3 hours to harden the formed film. Subsequently, the mixture was filtered, then washed with water and then filtered to obtain 115 parts of blue coating-clad pigment. The amount of the coating was about 15 % with respect to the pigment.

Likewise, aqueous dispersions of aqueous pastes containing 100 parts of dimethyl quinadoline pigment (C.I. pigment red 122), polyazo yellow pigment ("C.I. pigment yellow 166) and carbon black pigment ("C.I. pigment black 7), respectively, were treated and each added in drops to 300 parts of the resin solution noted above for coating, followed by after-treatment to obtain a red, a yellow and a black coating-clad pigment, respectively.

The toriboelectric charging of each of the coating-clad pigments was measured by a blow-off method, and all the obtained values were plus. In the case of the carbon black pigment, improvement of the electric insulation could be observed.

### Synthesis Example 2 (treatment of pigment)

50 parts of 70 % aqueous solution of methylated methylolmelamine resin was diluted with 50 parts of water. To the resultant solution were added 2.5 parts of glycine, 1.4 parts of 7 % hydrochloric acid aqueous solution and 10 parts of water for reaction at 50 to 55 °C . The condensation polymerization was continued until one drop of the resultant solution was added to water to precipitate the pre-condensate. The mixture was then neutralized by adding 7.6 parts of 20 % sodium hydroxide aqueous solution and 3.5 parts of water, thus bringing an end to the reaction. The resultant resin solution contained about 30 % of solid phase and remained transparent when diluted with water.

100 parts of this resin solution was diluted with water to 300 parts of resin solution for pigment treatment.

Meanwhile, 100 parts carbon black pigment (C.I. pigment black 7) was diluted by adding 1,900 parts of water and sufficiently dispersed. The dispersion was then charged into a reaction vessel, and its pH was adjusted to to 4.5 to 5 with acetic acid aqueous solution. To this dispersion, 300 parts of the resin solution noted above was added in drops by taking 2 hours while holding the mixture at 80 to 90°C.

The pH of the mixture was then adjusted to 4.5 to 5 with acetic acid aqueous solution, and the mixture was stirred continuously for 3 hours to harden the formed film.

Subsequently, the mixture was filtered, then washed with water and then dried to obtain 115 parts of coating-clad carbon black pigment. The amount of coating was about 15 % with respect to the pigment.

Likewise, aqueous dispersions of aqueous pastes containing 100 parts of phthalocyanine blue pigment (C.I. pigment blue 15 : 3), soluble azo lake pigment (C.I. pigment red 57 : 1) and diarylide yellow pigment (C.I. pigment yellow 17), respectively, were treated and each added in drops to 300 parts of the resin solution noted above for coating, followed by after-treatment to obtain a red, a yellow and a black coating-clad pigment, respectively.

### Synthesis Example 3 (treatment of pigment)

40 parts of melamine, 100 parts of 35 % formalin, 20 parts of methanol and 28 parts of water were mixed and stirred together while holding the temperature of the mixture at an elevated temperature of 80°C to obtian a colorless transparent solution. The solution was then cooled down to 40 to 45°C and then reacted with 2.8 parts of sulfamic acid. The reaction was continued until one drop of the resultant solution was added to water to precipitate the pre-condensate and then 6.0 parts of 20 % sodium hydroxide aqueous solution and 20 parts of methanol were added to the mixture to bring about an end to the reaction.

The resin solution thus obtained contained about 34 % of solid phase and remained to be transparent when diluted with water.

Meanwhile, an aqueous paste containing 100 parts phthalocyanine blue pigment (C.I. pigment blue 15 : 3) was diluted to 2,000 parts by adding 88.3 parts of the resin solution noted above for pigment treatment and further water and sufficiently dispersed. The dispersion was then charged into a reaction vessel, and acetic acid aqueous solution was added in drops for one hour while holding the temperature of the reaction mixture at 80 to 90°C, thus adjusting the pH of the reaction solution to 4.5 to 5. The reaction mixture was then stirred continuously for 3 hours to harden the formed film. Subsquently, the mixture was filtered, then washed with water and then dried to obtain 115 parts of blue coating-clad pigment. The amount of the coating was about 15 % with respect to the pigment.

Likewise, aqueous dispersions of aqueous pastes containing 100 parts of dimethyl quinacridone pigment (C.I. pigment red 122), polyazo yellow pigment (C.I. pigment yellow 166) and carbon black pigment (C. I. pigment black 7), respectively, were treated and each added in drops 88.3 parts of the resin solution noted above for coating, followed by after-treatment to obtain a red, a yellow and a black pigment, respectively.

The toriboelectric charging of each of the coating-clad pigments was measured by the blow-off method, and all the obtained values were plus. In the case of the carbon black pigment, improvement of the electric insulation could be observed.

### Example 1

20 parts of methacryl ester type resin soluble to aliphatic hydrocarbon type solvent was added to and dissolved in 70 parts of ISOPAR H (an aliphatic hydrocarbon type solvent). To the resultant solution was added 10 parts of copper phthalocyanine blue coating-clad pigment obtained in Synthesis Example 1, and then glass beads were added. The resultant mixture was then shaken in a paint shaker for 20 hours for dispersion, thus preparing a blue thick coloring solution.

30 parts of this thick coloring solution was then dispersed in 970 parts of ISOPAR G, thus obtaining a cyan electrophotographic liquid developer.

The thick coloring solution and electrophotographic liquid developer obtained in the above way, were excellent in the stability of dispersion. In addition, their pigment settles less when they was diluted. Further, the settled pigment could be readily re-dispersed.

The cyan electrophotographic liquid developer obtained as in the above was used for copying in a liquid electrophotographic copier to obtain cyan copy image having high image density, sharp and with less blur and contamination of ground. The image was color fast in various physical properties such as the light resistance.

Likewise, the dimethyl quinacridone, polyazo yellow and carbon black coating-clad pigments obtained in Synthesis Example 1 were used to obtain a magenta, an yellow and a black liquid developer, respectively. These developers were used together with the cyan liquid developer obtained as above for four-color full color copying in a full-color liquid electrophotographic copier. In addition, sharp four-color full color image was obtained using a full-color liquid electrostatic plotter.

### Example 2

10 parts of carbon black coating-clad pigment obtained in Synthesis Example 2 was mixed with 41 parts of an ester type wax, 41 parts of a paraffin type wax and 5 parts of a styrene-methacrylic ester type copolymer resin. These were melted by heating and sufficiently dispersed with a pigment-dispersing machine being heated and using dispersing media.

Then, 3 parts of silica were added. The pigment composition was coated on a polyester film setted on a heated coating plate according to the usual manner, thus obtaining a black ink film for a thermal transfer recoading.

The black ink film was used for copying in a thermo -transfer copier to obtain sharp black image.

Likewise, the phthalocyanine blue, soluble azo lake and diarylide yellow coating-clad pigments obtained in Synthesis Example 2 were used to prepare a cyan, a magenta and an yellow thermal transfer ink film, respectively. These ink films were used togather with th black ink film obtained as above for four-color full color copying in a full color thermal transfer copier to obtained sharp full color image.

Further, the ink films were used for copying on polyester sheet for an over-head projector to obtained a full color image capable of projecting a transparent full color image on a screen.

### Example 3

30 parts of phthalocyanine blue coating-clad pigment obtained in Synthesis Example 3 was sufficiently kneeded together with 70 parts of a styrene-methacrylic ester type copolymer resin (with a softening point of about 110°C , a glass transition point of about 56°C and a GPC process average molecular weight of about 90,000) using a heated three-roll mill set for dispersing pigment. Then, the mixture was cooled down and then pulverized to obtain coarse powder of blue high concentration coloring composition containing 30 % of pigment. Then, 11.4 parts of the blue high concentration coloring composition obtained in this way, 3 parts of chromium complex type negative charge control agent and 85.6 parts of styrene-methacrylic ester type copolymer resin as used above were kneaded in the usual way. The mixture was then cooled down, then coarsely pulverized, and then finely pulverized using a jet mill. The powder thus obtained was then sieved to obtain fine powder of blue resin composition with a grain size of 5 to 30 microns. Then, the mixture was sufficiently mixed with colloidal silica added as a fluidizer, thus obtaining a cyan electrophotographic dry developer.

This dry developer was mixed with carrier magnetic iron powder, and the mixture was used for copying in an electrophotographic copier for negative charge development to obtain sharp cyan image. The image obtained was excellently color fast in various physical properties such as the light resistance.

Likewise, the dimethyl quinacridone, polyazo yellow and carbon black coating-clad pigments obtained in Synthesis Example 3 were used to prepare a magenta, an yellow and a black dry developer, respectively. These dry developers were used together with the cyan dry developer obtained as above for four-color full color copying in a full color dry electrophotographic copier to obtain sharp full color image. The image was excellently color fast in various physical properties such as the light resistance.

### Example 4

An aqueous pigment dispersion was prepared, which was composed of 5 parts of phthalocyanine blue coating-clad pigment obtained in Synthesis Example 3, 3 parts of styrene -acrylate-methacrylic acid diethanolamine salt copolymer, 22 parts of ethylene glycol, 8 parts of glycerin and 62 parts of water. Then, coarse particles of pigment remaining without being dispersed were removed using a super-centrifugal separator, thus obtaining an aqueous cyan ink for ink jet.

Then, cyan ink was used to print image information with an on-demand type ink jet printer to obtain sharp cyan image.

Likewise, the dimethyl quinacridone, polyazo yellow and carbon black coating-clad pigments obtained in Synthesis Example 3 were used to prepare to obtain a magenta, an yellow and a black ink jet ink, respectively. These ink jet inks were used together with the cyan ink jet ink for four -color full color printing in a full color ink jet printer to obtain sharp full color image. The image was excellently color fast in various physical properties such as the light resistance.

As has been described in the foregoing, the coloring composition for image recording according to the invention uses coating-clad pigment with a thin fil coating of a hardened polymer having a polar group. The coating-c lad pigment provides high tinting strength, sharpness, clarity, transparency, etc., as well as providing controlled and adjusted surface charge.

Further, it is excellently color fast in light resistance, heat resistance, chemical resistance, water resistance, etc. Thus, it permits stable manufacture of the coloring composition. Further, when it is used for the coloring composition for image recording, it permits stable recording of sharp and clear image.

Further, in application to liquid developers used for electrophotography, electrostatic printing and electrostatic recording, it is possible to permit stable charging in liquid, and thus the developer permits long time, stable recording. Further, the obtainable image is highly dense and sharp, has less blur and ground contamination and is excellent in the drying and fixing properties. Further, full color liquid developers that are obtainable permit stable preservation of the color balance for long time and are excellent in the color reproducibility. Further, the dispersion stability and settling stability of the solution can be improved by adsorving the resin composition. Further, the pigment less settles in a diluted state, and settled pigment can be readily re-distributed.

Further, in the ink jet ink the resin component is likewise absorbed to improve the stabilty of the solution.

Further, in the electrophotographic dry developer the pigment particles can be charged, and this facilitates the adjustment of the toriboelectric charging.

Further, it is possible to provide and improve the electric insulation of a pigment having low electric resistance.

## Claims

1. A coloring composition for image recording coataining a pigment and a resin, said pigment being a coating clad pigment with a thin film coating of a hardened polymer substantially insoluble to dispersing media and having a polar group.

2. The coloring composition for image recording according to claim 1, wherein said pigment is a member of the group consisting of those of azo type, polyazo type, azo methine azo type, azomethine type, phthalocyanine type, quinacridone type, anthraquinone type, dioxazine type, indigo-thioingio type, perylene-perinone type, isoindolinone type, etc., carbon black pigment and titanium oxide pigment.

3. The coloring composition according to claim 1, wherein said polar group is a basic or acidic group.

4. The coloring composition according to claim 1, wherein said polar group is a basic group selected from the group consisting of amino group, qurternary ammonium group and pyridinium group or an acidic group selected from the group consisting of carboxyl group, sulfonic acid group, sulfuric acid ester group and phosphoric acid ester group.

5. The coloring composition for image recording according to claim 1, wherein said hardened polymer is a hardened thermosetting polymer having a methyloll group.

6. The coloring composition for image recording according to claim 5, wherein said hardened thermosetting polymer having a methylol group is a hardened polymer of a reaction product of a compound selected from the gorup consisting of melamine, urea, ethylene urea, biguanide, guanidine and dicyan diamide and aldehyde.

7. The coloring composition for image recording according to claim 1, wherein the amount of said hardened polymer thin film is 1 to 100 % by weight.

8. The coloring composition for image recording according to claim 1, wherein said coating-clad pigment is obtained by causing adsorption, settling or precipitation, on the surface of pigment particles, of a precursor capable of forming a hardened polymer substantially insoluble to dispersing media and having a polar group and concurrently or subsequently hardening said precursor.

9. The coloring composition for image recording according to claim 1, which is in the form of solid, paste or liquid containing a high concentration of pigment.

10. The coloring composition for image recording according to claim 1, which is in the form of fine particles.

11. The coloring composition for image recording according to claim 1, which is in the form of a liquid.

12. The coloring composition for image recording according to claim 1, which is in the form of a heat transferable thin film coated on a thin base film.
